# EUROPÄISCHE PATENTSCHRIFT

(11) **EP 3 796 250 B1**
(45) Veröffentlichungstag und Bekanntmachung des Hinweises auf die Patenterteilung: **06.05.2026**
(21) Anmeldenummer: 20183659.0
(22) Anmeldetag: 02.07.2020
(51) Int. Cl.: G06Q 50/02, G06Q 30/08

(54) **VERFAHREN ZUR AUSFÜHRUNG EINER LANDWIRTSCHAFTLICHEN DIENSTLEISTUNG**
METHOD FOR EXECUTING AN AGRICULTURAL SERVICE
PROCÉDÉ DE MISE EN UVRE D'UNE PRESTATION AGRICOLE

(30) Priorität: 20.09.2019 DE 102019125341
(43) Veröffentlichungstag der Anmeldung: 24.03.2021
(73) Patentinhaber: CLAAS 365FarmNet GmbH, 10117 Berlin (DE)
(72) Erfinder: Grundmann, Marten, 10829 Berlin (DE)
(74) Vertreter: CLAAS Gruppe

(56) Entgegenhaltungen:
- WO-A1-2019/089533
- US-A1- 2001 032 165
- US-A1- 2011 208 636
- US-A1- 2019 050 948

## Beschreibung

Die Erfindung betrifft ein Verfahren zur Ausführung einer landwirtschaftlichen Dienstleistung mittels einer Serverplattform gemäß Anspruch 1 sowie eine Serverplattform als solche gemäß Anspruch 14.

Landwirtschaftliche Dienstleistungen werden in vielen landwirtschaftlichen Betrieben zumindest teilweise extern eingekauft. Der einzelne Benutzer, insbesondere Landwirt, steht dabei jedoch vor dem Problem, dass es eine unüberschaubar große Anzahl an Dienstleistern gibt, die die gewünschte landwirtschaftliche Dienstleistung oder eine ähnliche landwirtschaftliche Dienstleistung anbieten. Dabei ist jedoch jeder Anbieter einzigartig. Wünscht der Benutzer beispielsweise, einen Pflanzenschutz durch einen Dienstleister durchführen zu lassen, so muss der Benutzer, gegebenenfalls in Abstimmung mit dem Dienstleister, ein Pflanzenschutzmittel wählen, abstimmen, ob und wie der Dienstleister die Anfahrt zu dem landwirtschaftlichen Schlag bewältigen kann, was wiederum von den vorhandenen landwirtschaftlichen Maschinen des Dienstleisters abhängt. Gleichzeitig hängen jedoch auch die Arbeitsqualität, die Geschwindigkeit, der Preis und der Zeitpunkt der Dienstleistung von den landwirtschaftlichen Maschinen des Dienstleisters ab. Erst wenn all diese Parameter zur Zufriedenheit und innerhalb der Möglichkeiten sowohl des Benutzers als auch des Dienstleisters abgesprochen sind, kann die Dienstleistung durchgeführt werden.

Bisher muss der Benutzer die diversen vorhandenen Maschinen bei diversen Dienstleistern selbst erfragen oder beispielsweise im Internet ermitteln, muss deren technische Parameter zumindest teilweise kennen, um abschätzen zu können, ob diese für seine gewünschte Dienstleistung nutzbar sind, muss anschließend mit den in Frage kommenden Dienstleistern Termine und andere Parameter abstimmen, den Preis verhandeln und letztlich einen Dienstleister beauftragen. Aufgrund der großen Menge an notwendigen, jedoch großteils nicht vorhandenen Informationen, ist es dem Benutzer kaum möglich, den besten Dienstleister ausfindig zu machen. Letztendlich basiert die Auswahl eines Dienstleisters durch den Benutzer daher großteils auf Zufall.

Die Druckschrift US 2011/208636 A1 bezieht sich auf ein System zum Vermitteln von landwirtschaftlichen Erzeugnissen zwischen Herstellern und Käufern. Das System erlaubt einem Käufer Kriterien für ein gewünschtes Erzeugnis festzulegen und ermittelt ein passendes Herstellerangebot basierend auf diesen Kriterien.

Die Druckschrift US 2001/032165 A1 offenbart eine Handelsplattform, auf der agrarische Produkte verkauft werden. Die agrarischen Produkte werden Kategorien einer hierarchischen Kategorisierung zugewiesen, welche sowohl bei Produktanfragen als auch bei Produktangeboten verwendet werden.

Die Druckschrift US 2019/050948 A1 offenbart ein Vorhersagesystem, welches eine zu erwartende Ernte für eine landwirtschaftliche Nutzfläche berechnet und für diese Vorhersage die Beschaffenheit der landwirtschaftlichen Nutzfläche, die Art der Feldfrucht sowie die eingesetzten landwirtschaftlichen Geräte miteinbezieht. Während der Ausführung einer landwirtschaftlichen Tätigkeit durch eines der Geräte, werden Messdaten durch Sensoren, die beispielsweise an den Geräten angebracht sind, ermittelt und an das Vorhersagesystem übertragen.

Die Druckschrift WO 2019/089533 A1 bezieht sich auf ein Überwachungssystem, mit welchem der Status landwirtschaftlicher Produkte festgestellt werden kann. Dazu werden Messdaten durch Sensoren erfasst und an einen Vorhersagealgorithmus übergeben, der einen Zustand des landwirtschaftlichen Produkts anhand der Messdaten bestimmt.

Der Erfindung liegt das Problem zugrunde, das bekannte Verfahren derart auszugestalten und weiterzubilden, dass die Effizienz der Ausführung landwirtschaftlicher Dienstleistungen gesteigert wird.

Das obige Problem wird durch die Merkmale von Anspruch 1 gelöst.

Wesentlich ist die grundsätzliche Überlegung, dass eine Serverplattform, die eine Schlagkartei aufweist, die Schlaginformationen zu mindestens einem einem Benutzer zugeordneten landwirtschaftlichen Schlag umfasst, bereits einen Großteil der Informationen besitzt, die benutzerseitig zur Verfügung gestellt werden müssen, um effizient zu ermitteln, welche Anforderungen an einen Dienstleister gestellt werden müssen. Stellen nun auch Dienstleister Dienstleisterdaten zur Verfügung, wird es möglich, einen Grad einer Übereinstimmung zu ermitteln und dem Benutzer die Auswahl des für ihn besten Dienstleisters deutlich zu vereinfachen. Aufgrund der hohen Komplexität landwirtschaftlicher Dienstleistungen, der Fülle an Informationen, wie beispielsweise den technischen Eigenschaften der bei den Dienstleistern vorhandenen landwirtschaftlichen Maschinen und der Möglichkeit große Datenmengen automatisch zu verarbeiten, muss das vorschlagsgemäße Verfahren computergestützt durchgeführt werden.

Im Einzelnen wird ein Verfahren zur Ausführung einer landwirtschaftlichen Dienstleistung mittels einer Serverplattform vorgeschlagen, wobei die Serverplattform mit einem Benutzer und mehreren Dienstleistern kommuniziert, wobei die Serverplattform eine Schlagkartei aufweist, die Schlaginformationen zu mindestens einem dem Benutzer zugeordneten landwirtschaftlichen Schlag umfasst, wobei die Serverplattform in einer Auftragsgenerierungs-Routine basierend auf den Schlaginformationen und von dem Benutzer empfangenen Dienstleistungsanweisungen einen Dienstleistungsauftrag zur Ausführung einer schlagspezifischen landwirtschaftlichen Dienstleistung mit einem Auftragsprofil generiert, wobei die Serverplattform in einer Angebotsgenerierungs-Routine aus Dienstleisterdaten von Dienstleistern Dienstleistungsangebote jeweils mit einem Angebotsprofil generiert, wobei die Serverplattform in einer Vergleichs-Routine das Auftragsprofil mit den Angebotsprofilen vergleicht, jeweils einen Grad einer Übereinstimmung zwischen dem Auftragsprofil und den Angebotsprofilen ermittelt und dem Benutzer basierend auf dem Grad der Übereinstimmung ein oder mehrere zu dem Dienstleistungsauftrag passende Dienstleistungsangebote vorschlägt und wobei die Serverplattform in einer Auftragsvergabe-Routine basierend auf einer Auswahl des Benutzers eines der Dienstleistungsangebote den Dienstleister des ausgewählten Dienstleistungsangebots mit der Ausführung der Dienstleistung beauftragt. Auf alle Ausführungen zu dem vorschlagsgemäßen Verfahren darf verwiesen werden.

Im Folgenden wird die Erfindung anhand einer lediglich ein Ausführungsbeispiel darstellenden Zeichnung näher erläutert. In der Zeichnung zeigt
- Fig. 1: eine schematische Darstellung des vorschlagsgemäßen Verfahrens in der bevorzugten Ausführungsform und
- Fig. 2: eine Weiterführung des vorschlagsgemäßen Verfahrens insbesondere hinsichtlich Feedback und Dokumentation.

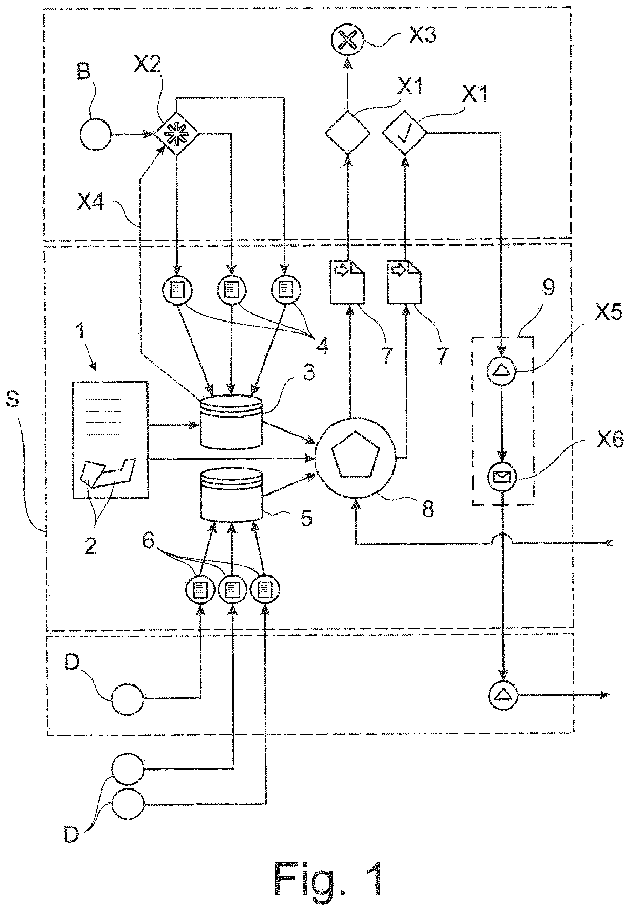

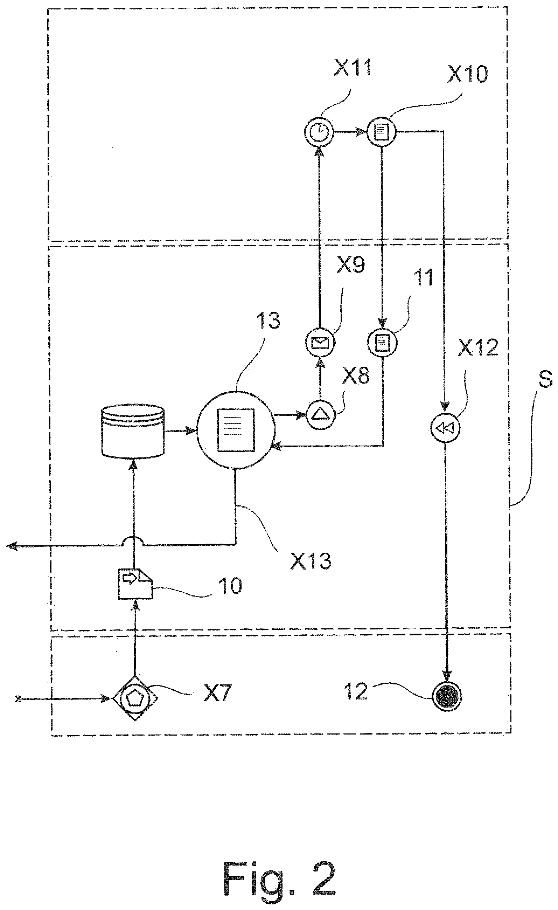

Das in den Figuren 1 und 2 dargestellte Verfahren zur Ausführung einer landwirtschaftlichen Dienstleistung wird mittels einer Serverplattform S durchgeführt. Die Serverplattform S kann dabei einen oder mehrere Server und ein Computerprogramm umfassen und muss nicht zwingend auf einen Ort beschränkt sein. Die Serverplattform S kommuniziert mit einem Benutzer B und mehreren Dienstleistern D. Diese Kommunikation kann auf ganz unterschiedliche Art und Weise vorgesehen sein. Zumindest teilweise ist hier und vorzugsweise, insbesondere mit dem Benutzer B, eine Echtzeitkommunikation vorgesehen. Die Kommunikation kann vor allem über das Internet verlaufen. Üblicherweise wird ein Display eines Computers des Benutzers B bzw. des jeweiligen Dienstleisters D bei der Kommunikation eingesetzt. Alternativ sind jedoch auch andere Geräte, vorzugsweise ein mobiles Gerät, insbesondere ein Smartphone, nutzbar. Grundsätzlich kann es auch vorgesehen sein, dass die Serverplattform S den Computer und/oder das mobile Gerät des Benutzers B und/oder des jeweiligen Dienstleisters D umfasst. So kann beispielsweise ein Teil eines Computerprogramms der Serverplattform S auf dem Computer installiert sein. Prinzipiell ist auch eine dezentrale Ausführungsform der Serverplattform S denkbar, bei der zum Beispiel nur die Computer des Benutzers B und der jeweiligen Dienstleister D die Serverplattform S bilden.

Die Serverplattform S weist eine Schlagkartei 1 auf. Die Schlagkartei 1 umfasst Schlaginformationen zu mindestens einem dem Benutzer B zugeordneten landwirtschaftlichen Schlag 2. Eine solche Schlagkartei 1 kann dabei eine Vielzahl an Informationen zu mehreren landwirtschaftlichen Schlägen 2 umfassen.

Diese Informationen sind üblicherweise dynamisch, das heißt sie werden fortlaufend angepasst. Hier und vorzugsweise werden die Schlaginformationen auch während des vorschlagsgemäßen Verfahrens angepasst.

Die Serverplattform S generiert in einer Auftragsgenerierungs-Routine 3 basierend auf den Schlaginformationen und von dem Benutzer B empfangenen Dienstleistungsanweisungen 4 einen Dienstleistungsauftrag zur Ausführung einer schlagspezifischen landwirtschaftlichen Dienstleistung mit einem Auftragsprofil.

In einer Angebotsgenerierungs-Routine 5 generiert die Serverplattform S aus Dienstleisterdaten 6 von Dienstleistern D Dienstleistungsangebote 7 mit jeweils einem Angebotsprofil.

Die Auftragsgenerierungs-Routine 3 und die Angebotsgenerierungs-Routine 5 können in beliebiger Reihenfolge oder auch gleichzeitig ablaufen. Vorzugsweise werden die Dienstleisterdaten 6 jedoch als erstes bereitgestellt. Weiter vorzugsweise wird anschließend die Auftragsgenerierungs-Routine 3 durchgeführt und noch weiter vorzugsweise anschließend die Angebotsgenerierungs-Routine 5 zumindest teilweise auf Basis des Auftragsprofils. So können die Dienstleisterdaten 6 vorzugsweise grundsätzlich bereits in der Serverplattform S hinterlegt sein, während die Angebotsprofile für jedes Auftragsprofil einer angefragten landwirtschaftlichen Dienstleistung spezifisch generiert werden.

In einer Vergleichs-Routine 7 vergleicht die Serverplattform S das Auftragsprofil mit den Angebotsprofilen. Die Serverplattform S ermittelt jeweils einen Grad einer Übereinstimmung zwischen dem Auftragsprofil und den Angebotsprofilen und schlägt dem Benutzer B basierend auf dem Grad der Übereinstimmung ein oder mehrere zu dem Dienstleistungsauftrag passende Dienstleistungsangebote 7 vor.

Die Serverplattform S schlägt dem Benutzer B vorzugsweise immer zumindest ein Dienstleistungsangebot 7 vor. Dieses ist dabei vorzugsweise das Dienstleistungsangebot 7 mit dem höchsten Grad der Übereinstimmung. Weiter vorzugsweise schlägt die Serverplattform S dem Benutzer B, sofern möglich, immer mehrere Dienstleistungsangebote 7 vor. Hier und vorzugsweise schlägt die Serverplattform S dem Benutzer B zumindest die drei Dienstleistungsangebote 7 vor, die den höchsten Grad der Übereinstimmung aufweisen. Vorzugsweise schlägt die Serverplattform S dem Benutzer B zumindest die fünf Dienstleistungsangebote 7, weiter vorzugsweise zumindest die zehn Dienstleistungsangebote 7 vor, die den höchsten Grad der Übereinstimmung aufweisen.

Die Dienstleistungsangebote 7 können dem Benutzer B insbesondere als nach dem Grad der Übereinstimmung sortierte Liste vorgeschlagen werden.

Es kann dann vorgesehen sein, dass der Benutzer B eines der Dienstleistungsangebote 7 auswählt. Dies ist in Fig. 1 in dem oberen, die Aktionen des Benutzers B repräsentierenden Rechteck als Auswahlmöglichkeit X1 dargestellt. Das mittlere Rechteck in Fig. 1 repräsentiert die Serverplattform S inklusive ihrer Aktionen und das untere Rechteck repräsentiert die Aktionen des ausgewählten Dienstleister D. Dies gilt für Fig. 2 entsprechend.

In einer Auftragsvergabe-Routine 9 beauftragt die Serverplattform S basierend auf der benutzerseitigen Auswahl eines der Dienstleistungsangebote 7 den Dienstleister D des ausgewählten Dienstleistungsangebots 7 mit der Ausführung der Dienstleistung. Beispielhaft ist dies durch eine Generierung der notwendigen Daten im Schritt X5 "Datengenerierung" und einen Versand der Daten im Schritt X6 "Datenversand" in Fig. 1 dargestellt. Im weiteren Verlauf des Verfahrens ist somit vorerst nur noch der ausgewählte Dienstleister D von Belang. Sodann führt der ausgewählte Dienstleister D vorzugsweise die Dienstleistung, insbesondere mit zumindest einer landwirtschaftlichen Maschine, aus. Um dem Dienstleister D diese Ausführung zu ermöglichen, ist vorzugsweise vorgesehen, dass die Serverplattform S dem ausgewählten Dienstleister D einen Teil der Schlaginformationen aus der Schlagkartei 1 zu dem landwirtschaftlichen Schlag 2, der von der Dienstleistung betroffen ist, wobei auch mehrere landwirtschaftliche Schläge 2 betroffen sein können, übermittelt. Vorzugsweise ist dabei vorgesehen, dass diese Schlaginformationen an die beauftragte Dienstleistung angepasst sind. So kann dem ausgewählten Dienstleister D insbesondere eine automatisch erstellte Anfahrtsskizze, die an die während der Dienstleistung genutzten landwirtschaftlichen Maschinen angepasst ist, von der Serverplattform S in der Auftragsvergabe-Routine 9 übermittelt werden.

Am Beispiel einer Beprobung des Bodens des landwirtschaftlichen Schlags soll das vorschlagsgemäße Verfahren anhand von Fig. 1 kurz erläutert werden. Beispielsweise ruft der Benutzer B auf der Serverplattform S die Schlagkartei 1 auf, wählt dort einen landwirtschaftlichen Schlag 2 aus und dort drei Positionen für eine Probebohrung. Dies ist durch eine Benutzeraktion X2 in Fig. 1 repräsentiert. Möglicherweise wählt der Benutzer B dann noch aus, dass er eine Grundwassermenge bestimmt haben möchte. Sodann generiert die Serverplattform S aus diesen Dienstleistungsanweisungen 4, aus den Schlaginformationen, insbesondere Bodeninformationen zur Art des Untergrunds, einer Lage des landwirtschaftlichen Schlags 2 und der dort bekannten Grundwassertiefe das Auftragsprofil. Der Serverplattform S kann nun aus den Dienstleisterdaten 6 bekannt sein, dass grundsätzlich fünf Dienstleister D für die Dienstleistung in Frage kommen, von denen drei in der spezifischen Region tätig sind. Hat nun der Benutzer B beispielsweise noch ausgewählt, dass er eine Bohrtiefe von 20 m wünscht, ist der Serverplattform S jedoch aus den Schlaginformationen bekannt, dass der Grundwasserpegel bereits auf 10 m Tiefe liegt, so kann die Serverplattform S dem Benutzer B einen ersten Dienstleister D mit einem Bohrer von einer Länge von 30 m, der für den vorhandenen Untergrund in Frage kommt. Ferner kann die Serverplattform S einen zweiten Dienstleister D mit einer Bohrerlänge von lediglich 15 m anbieten, obwohl zumindest die Bohrerlänge des zweiten Dienstleisters D keine vollständige Übereinstimmung darstellt. Der dritte Dienstleister D mit einer Bohrerlänge von 5 m würde nicht vorgeschlagen. Der Benutzer B kann dann bei der Auswahlmöglichkeit X1 eines der beiden Dienstleistungsangebote 7 auswählen. Das andere Dienstleistungsangebot 7 wird abgelehnt (X3).

Hier und vorzugsweise umfasst das Auftragsprofil einen Auftragsparametersatz mit harten und weichen Auftragsparametern. Die harten Auftragsparameter unterscheiden sich von den weichen hier dadurch, dass sie für eine erfolgreiche Dienstleistung erfüllt sein müssen. Es kann auch vorgesehen sein, dass die Angebotsprofile jeweils einen Angebotsparametersatz mit, insbesondere harten und weichen, Angebotsparametern umfassen. In der Vergleichs-Routine 8 kann dann der Grad der Übereinstimmung auf Basis der weichen Auftragsparameter und vorzugsweise der weichen Angebotsparameter ermittelt werden. Ein derartiger weicher Auftragsparameter könnte die oben genannte Bohrtiefe sein. Im dortigen Beispiel hatte der Benutzer B zwar eine Bohrtiefe von 20 m ausgewählt, jedoch könnte für seine geforderte Dienstleistung auch eine Bohrtiefe von 15 m ausreichen. Ein harter Auftragsparameter könnte hingegen die minimale Bohrtiefe von 10 m oder die Art der Dienstleistung, also die Bodenbeprobung, sein. Vorzugsweise ist vorgesehen, dass die harten Auftragsparameter in der Vergleichs-Routine 8 darauf geprüft werden, ob sie mit den Angebotsparametern übereinstimmen, wobei das Ergebnis insbesondere binär abgebildet wird. Die weichen Auftragsparameter hingegen weisen vorzugsweise einen Parameterbereich auf, wodurch der Grad der Übereinstimmung einfach ermittelt werden kann. Im obigen Beispiel würde das zweite Angebot mit einer Bohrtiefe von 15 m einen geringeren Grad der Übereinstimmung mit dem weichen Auftragsparameter der Bohrtiefe aufweisen, als das Angebot mit einer Bohrtiefe von 30 m. Analog dazu können auch harte und weiche Angebotsparameter definiert sein. Wird ein harter Angebotsparameter, beispielsweise eine Zahlungsfähigkeit, vom Benutzer B nicht erfüllt, kommt der Benutzer B für den Dienstleister und somit das Dienstleistungsangebot 7 nicht in Frage. Auch hier unterscheiden sich die harten Angebotsparameter von den weichen dadurch, dass die harten Angebotsparameter erfüllt sein müssen.

Vorzugsweise werden dem Benutzer B nur Dienstleistungsangebote 7 vorgeschlagen, bei denen alle harten Auftragsparameter mit den Angebotsparametern übereinstimmen. Weiter vorzugsweise werden dem Benutzer B nur Dienstleistungsangebote 7 vorgeschlagen, bei denen alle harten Angebotsparameter mit den Auftragsparametern übereinstimmen. Hat ein Dienstleister D beispielsweise festgelegt, dass er trotz der prinzipiell vorhandenen Möglichkeit keine Grundwasserbohrungen vornimmt, so kann dies ein harter Angebotsparameter sein. Dem Benutzer B dieses Dienstleistungsangebot 7 vorzuschlagen, wäre häufig nicht zielführend.

Hier und vorzugsweise werden die Auftragsparameter und vorzugsweise die Angebotsparameter, zumindest teilweise, von der Serverplattform S als hart oder weich klassifiziert. Zusätzlich oder alternativ können die Auftragsparameter teilweise von dem Benutzer B als hart oder weich klassifiziert werden und wieder zusätzlich oder alternativ können auch die Angebotsparameter teilweise von dem jeweiligen Dienstleister D als hart oder weich klassifiziert werden. Es kann vorgesehen sein, dass die von dem Benutzer B und/oder dem Dienstleister D vorgenommene Klassifizierung in der Vergleichs-Routine 8 teilweise von der Serverplattform S geändert wird. So könnte, wieder am obigen Beispiel, der Benutzer die Bohrtiefe als harten Auftragsparameter klassifiziert haben, sich dabei jedoch über die Tiefe des Grundwasserpegels geirrt haben. Diese Klassifizierung könnte von der Serverplattform S selbstständig geändert werden, um dem Benutzer B alle relevanten Dienstleistungsangebote 7 anzeigen zu können.

Hier und vorzugsweise wird der Grad der Übereinstimmung basierend auf einer Gewichtung der weichen und vorzugsweise der harten Auftragsparameter und/oder Angebotsparameter ermittelt. Beispielsweise könnte ein Preis hoch gewichtet und ein Zeitpunkt des Erbringens der Dienstleistung dafür niedrig gewichtet sein oder andersherum. Die Gewichtung kann vom Benutzer B vorgegeben werden und/oder von der Serverplattform S automatisch ermittelt werden. So könnte in diesem Fall der Benutzer B zum Beispiel vorgeben, dass der Preis hoch zu gewichten ist, während die Serverplattform S eine Gewichtung der Bohrtiefe im obigen Beispiel selbst festlegt.

Hier und vorzugsweise wird von der Serverplattform S auf Basis des Grads der Übereinstimmung eine Rangfolge der Dienstleistungsangebote 7 ermittelt und dem Benutzer B zumindest teilweise angezeigt.

Die Schlaginformationen umfassen vorzugsweise Informationen zur Lage des landwirtschaftlichen Schlags 2, insbesondere Anfahrtsdaten, und/oder Informationen zur Größe des landwirtschaftlichen Schlags 2, insbesondere Abmessungen des landwirtschaftlichen Schlags 2, und/oder Informationen zur Bodenart des landwirtschaftlichen Schlags 2 und/oder Informationen zur Frucht des landwirtschaftlichen Schlags 2, insbesondere einer Fruchtart des landwirtschaftlichen Schlags 2. Je nach Dienstleistung können eine oder mehrere dieser Schlaginformationen für die Generierung des Auftragsprofils verwendet werden und/oder dem Dienstleister D übermittelt werden.

Im Folgenden wird nun anhand von Fig. 1 der bevorzugte Ablauf der Auftragsgenerierungs-Routine 3 erläutert. Hier und vorzugsweise wird dem Benutzer B zumindest ein Teil der Schlaginformationen in der Auftragsgenerierungs-Routine 3 angezeigt. Sodann wählt der Benutzer B einen Teil der Schlaginformationen als Dienstleistungsanweisungen 4 aus. Die Dienstleistungsanweisungen 4 werden mit den Schlaginformationen verknüpft, um das Auftragsprofil des Dienstleistungsauftrags zu generieren. Wieder am obigen Beispiel wählt der Benutzer B beispielsweise drei Punkte für die Bodenbeprobung aus, die dann mit dem dortigen Untergrund, ihrer Lage und einer Anfahrt zum Schlag 2 verknüpft werden. Da der Benutzer B die Beprobungspunkte anhand einer Karte des landwirtschaftlichen Schlags 2 auswählt, ist dies auch eine Auswahl eines Teils der Schlaginformationen. Hier und vorzugsweise wird das Auftragsprofil dem Benutzer B von der Serverplattform S angezeigt und vom Benutzer B abgelehnt oder abgeändert oder akzeptiert. Die Interaktion mit dem Benutzer ist durch den Pfeil X4 angedeutet, der zur Benutzeraktion X2 zurückführt. Zurück bezieht sich dabei darauf, dass das Verfahren in der Zeichnung insgesamt großteils von links nach rechts und von Fig. 1 zu Fig. 2 verläuft.

Hier und vorzugsweise wird in der Auftragsgenerierungs-Routine 3 das Auftragsprofil in einer Teil-Auftragsgenerierungs-Routine interaktiv zwischen der Serverplattform S und dem Benutzer B generiert. Dies geschieht, indem dem Benutzer B zumindest ein Teil der Schlaginformationen angezeigt wird, indem der Benutzer B einen Teil der Schlaginformationen als Dienstleistungsanweisungen auswählt und indem die Dienstleistungsanweisungen mit den Schlaginformationen verknüpft werden, um ein Teil-Auftragsprofil des Dienstleistungsauftrags zu generieren. Vorzugsweise wird das Teil-Auftragsprofil dem Benutzer B von der Serverplattform S angezeigt und vom Benutzer B abgelehnt oder abgeändert oder akzeptiert.

Im Anschluss an die Teil-Auftragsgenerierungs-Routine können von der Serverplattform S aus dem Teil-Auftragsprofil prognostizierte Schlaginformationen ermittelt werden. Am obigen Beispiel erläutert, kann vorgesehen sein, dass der Benutzer B eine Beprobung des landwirtschaftlichen Schlags 2 durchführen möchte. Das Teil-Auftragsprofil kann dann diese Beprobung betreffen. Daraus kann die Serverplattform S ermitteln, dass nach der Beprobung abhängig vom Ergebnis eine Düngung des landwirtschaftlichen Schlags 2 vorgesehen sein kann. Dies können die prognostizierten Schlaginformationen sein. Es kann dann allgemein vorgesehen sein, dass die Teil-Auftragsgenerierungs-Routine erneut durchgeführt wird, wobei dem Benutzer B zusätzlich oder alternativ zu einem Teil der Schlaginformationen die prognostizierten Schlaginformationen angezeigt werden. Werden dem Benutzer somit als prognostizierte Schlaginformationen mögliche Grundwasserpegel angezeigt, kann er darauf basierend in der zweiten Teil-Auftragsgenerierungs-Routine eine Düngung des landwirtschaftlichen Schlags 2 als Dienstleistung anfragen. In der zweiten Teil-Auftragsgenerierungs-Routine wird somit ein weiteres Teil-Auftragsprofil generiert. Es ist auch denkbar, dass mehrere Teil-Auftragsgenerierungs-Routinen durchgeführt werden, ohne dass sich die Dienstleistungen unterscheiden. Beispielsweise kann der Benutzer B mittels eines interaktiven Fragebogens durch mehrere Schritte der Generierung des Auftragsprofils geführt werden. So könnte der Benutzer B auch mehrere Bohrungen in verschiedenen Teilen des landwirtschaftlichen Schlags 2 wünschen und diese einzeln definieren, wobei die Serverplattform S einen ungefähren Validitäts-Radius der aus der Beprobung gewonnen Information generiert. Zwei Bohrungen in unmittelbarer Nähe zueinander würde der Benutzer B wahrscheinlich nicht vorsehen, es könnte jedoch möglich sein, dass ein Wechsel einer Bodenart dies trotzdem fordert. Auf diese Information könnte die Serverplattform S den Benutzer B dann als prognostizierte Schlaginformation hinweisen.

Hier und vorzugsweise ist die Dienstleistung eine Aussaat, eine Düngung, eine Bodenbeprobung, ein Pflanzenschutz oder eine Ernte.

In der Angebotsgenerierungs-Routine 5 werden hier und vorzugsweise aus technischen Informationen des Dienstleisters D und/oder aus betriebswirtschaftlichen Informationen des Dienstleisters D als Dienstleisterdaten 6 des jeweiligen Dienstleisters D von der Serverplattform S Angebotsprofile generiert. Die technischen Informationen des Dienstleisters D können vorzugsweise das Vorhandensein von für den Dienstleistungsauftrag notwendigen Maschinen, insbesondere als harten Angebotsparameter, und/oder die Tauglichkeit von Maschinen für den Dienstleistungsauftrag, insbesondere als weichen Angebotsparameter, umfassen. Zusätzlich oder alternativ können die betriebswirtschaftlichen Informationen des Dienstleisters D eine zeitliche Verfügbarkeit der Dienstleistung, insbesondere als harten oder weichen Angebotsparameter, und/oder einen Preis der Dienstleistung, insbesondere als weichen Angebotsparameter, umfassen.

Im Folgenden wird anhand von Fig. 2 eine bevorzugte Erweiterung des vorschlagsgemäßen Verfahrens erläutert. Während oder nach der Ausführung der Dienstleistung X7 wird hier und vorzugsweise die Ausführung der Dienstleistung X7, insbesondere automatisch mittels einer landwirtschaftlichen Maschine, durch den Dienstleister D dokumentiert und die Dokumentation 10 an die Serverplattform S übermittelt. Die Dokumentation 10 kann, zumindest teilweise, durch Sensoren der landwirtschaftlichen Maschine erstellt werden. So kann beispielsweise die Ausbringung von Düngemengen an verschiedenen Positionen des landwirtschaftlichen Schlags 2 dokumentiert werden.

Hier und vorzugsweise wird die Ausführung der Dienstleistung X7 dem Benutzer B angezeigt. Dafür werden die notwendigen Informationen vorzugsweise im Schritt X8 "Datengenerierung 2" aufbereitet und im Schritt X9 "Datenversand 2" versandt. Dies kann insbesondere auf Basis der Dokumentation 10 erfolgen. Der Benutzer B übermittelt (Schritt X10 "Benutzerübermittlung") dann im späteren Verlauf (X11 "Wartezeit") hier und vorzugsweise ein Feedback 11 zur Qualität der Ausführung an die Serverplattform S.

Aus dem Feedback 11 kann von der Serverplattform S eine Bewertung des Dienstleisters D erstellt werden. Das Feedback 11 kann jedoch auch eine Bewertung des Dienstleisters D umfassen. Neben dem Feedback 11 kann auch vorgesehen sein, dass von dem Benutzer B und/oder der Serverplattform S eine Bezahlung 12 des Dienstleisters D vorgenommen wird. Insbesondere bei einer Abwicklung der Bezahlung 12 über die Serverplattform S entsteht eine höhere Sicherheit für den Benutzer B. Die Abrechnung X12 der Dienstleistung kann von der Serverplattform S automatisch, insbesondere anhand der Dokumentation 10, erstellt werden. Somit wird auch dem Dienstleister D Arbeit erspart.

Alle oder einige der obigen zu Fig. 2 erläuterten Schritte können in einer Prüf-Routine 13 durchgeführt werden. Wie anhand des von der Prüf-Routine 13 zur Vergleichs-Routine 8 zurückführenden Pfeils X13, der die Informationsübermittlung zum Selbstlernen andeutet, verdeutlicht wird, kann vorgesehen sein, dass die Vergleichs-Routine 8 von der Serverplattform S selbstlernend optimiert wird. Diese Optimierung findet insbesondere auf Basis der Dokumentation 10 und/oder des Feedbacks 11 statt. Ist der Benutzer B beispielsweise mit der Ausführung der Dienstleistung nicht zufrieden, zeigt die Dokumentation 10 jedoch, dass die Dienstleistung auftragsgemäß durchgeführt wurde, kann von der Serverplattform S ermittelt werden, dass die Auftragsparameter der Serverplattform S nicht entsprechend der Wünsche des Benutzers B generiert wurden. Entsprechend wird hier und vorzugsweise die Vergleichs-Routine 8 auf Basis des Feedbacks 11 hinsichtlich der Präferenzen des Benutzers B optimiert.

Es kann vorgesehen sein, dass die Gewichtung der weichen und vorzugsweise der harten Auftragsparameter und/oder Angebotsparameter, insbesondere auf Basis der Dokumentation 10 und/oder des Feedbacks 11, selbstlernend optimiert wird. So könnte beispielsweise eine schlechte Gewichtung Ursache des unzufriedenen Benutzers B sein. Zusätzlich oder alternativ kann vorgesehen sein, dass die Klassifizierung der Auftragsparameter und/oder der Angebotsparameter als hart oder weich durch die Serverplattform S, insbesondere auf Basis der Dokumentation 10 und/oder des Feedbacks 11, selbstlernend optimiert wird.

Nach einer weiteren Lehre, der eigenständige Bedeutung zukommt, wird eine Serverplattform S eingerichtet zur Durchführung eines vorschlagsgemäßen Verfahrens beansprucht. Auf alle Ausführungen zu dem vorschlagsgemäßen Verfahren darf verwiesen werden. Eine eigenständige Bedeutung kommt auch einem oder mehreren Computerprogrammen zu, die zur Ausführung des vorschlagsgemäßen Verfahrens oder Teilen davon, insbesondere der Auftragsgenerierungs-Routine 4 und/oder der Angebotsgenerierungs-Routine 5 und/oder der Vergleichs-Routine 8 und/oder der Auftragsvergabe-Routine 9 und/oder der Prüf-Routine 13, ausgestaltet sind.

### Bezugszeichenliste

- 1: Schlagkartei
- 2: Landwirtschaftlicher Schlag
- 3: Auftragsgenerierungs-Routine
- 4: Dienstleistungsanweisungen
- 5: Angebotsgenerierungs-Routine
- 6: Dienstleisterdaten
- 7: Dienstleistungsangebote
- 8: Vergleichs-Routine
- 9: Auftragsvergabe-Routine
- 10: Dokumentation
- 11: Feedback
- 12: Bezahlung
- 13: Prüf-Routine
- S: Serverplattform
- B: Benutzer
- D: Dienstleister
- X1: Auswahlmöglichkeit
- X2: Benutzeraktion
- X3: Ablehnung
- X4: Interaktion mit dem Benutzer
- X5: Datengenerierung
- X6: Datenversand
- X7: Ausführung der Dienstleistung
- X8: Datengenerierung 2
- X9: Datenversand 2
- X10: Benutzerübermittlung
- X11: Wartezeit
- X12: Abrechnung
- X13: Informationsübermittlung zum Selbstlernen

## Patentansprüche

1. Verfahren zur Ausführung einer landwirtschaftlichen Dienstleistung mittels einer Serverplattform (S),
wobei die Serverplattform (S) mit einem Benutzer (B) und mehreren Dienstleistern (D) kommuniziert,
wobei die Serverplattform (S) eine Schlagkartei (1) aufweist, die Schlaginformationen zu mindestens einem dem Benutzer (B) zugeordneten landwirtschaftlichen Schlag (2) umfasst,
wobei die Serverplattform (S) in einer Auftragsgenerierungs-Routine (3) basierend auf den Schlaginformationen und von dem Benutzer (B) empfangenen Dienstleistungsanweisungen (4) einen Dienstleistungsauftrag zur Ausführung einer schlagspezifischen landwirtschaftlichen Dienstleistung mit einem Auftragsprofil generiert,
wobei die Serverplattform (S) in einer Angebotsgenerierungs-Routine (5) aus Dienstleisterdaten (6) von Dienstleistern (D) Dienstleistungsangebote (7) jeweils mit einem Angebotsprofil generiert,
wobei die Serverplattform (S) in einer Vergleichs-Routine (8) das Auftragsprofil mit den Angebotsprofilen vergleicht, jeweils einen Grad einer Übereinstimmung zwischen dem Auftragsprofil und den Angebotsprofilen ermittelt und dem Benutzer (B) basierend auf dem Grad der Übereinstimmung ein oder mehrere zu dem Dienstleistungsauftrag passende Dienstleistungsangebote (7) vorschlägt und
wobei die Serverplattform (S) in einer Auftragsvergabe-Routine (9) basierend auf einer Auswahl des Benutzers (B) eines der Dienstleistungsangebote (7) den Dienstleister (D) des ausgewählten Dienstleistungsangebots (7) mit der Ausführung der Dienstleistung beauftragt,
wobei die Dienstleistung eine Aussaat, eine Düngung, eine Bodenbeprobung, ein Pflanzenschutz oder eine Ernte ist,
wobei in der Angebotsgenerierungs-Routine (5) aus technischen Informationen des Dienstleisters (D) als Dienstleisterdaten (6) des jeweiligen Dienstleisters (D) von der Serverplattform (S) Angebotsprofile generiert werden,
wobei die technischen Informationen des Dienstleisters (D) das Vorhandensein von für den Dienstleistungsauftrag notwendigen Maschinen umfassen,
wobei die Ausführung der Aussaat, Düngung, Bodenbeprobung, des Pflanzenschutzes oder der Ernte automatisch mittels einer landwirtschaftlichen Maschine durch den Dienstleister (D) dokumentiert und die Dokumentation an die Serverplattform (S) übermittelt wird,
wobei die Dokumentation durch Sensoren der landwirtschaftlichen Maschine erstellt werden,
wobei die Vergleichs-Routine (8) von der Serverplattform (S) selbstlernend auf Basis der mittels der Sensoren der landwirtschaftlichen Maschine erstellten Dokumentation optimiert wird.

2. Verfahren nach Anspruch 1, **dadurch gekennzeichnet, dass** das Auftragsprofil einen Auftragsparametersatz mit harten und weichen Auftragsparametern umfasst, dass die Angebotsprofile jeweils einen Angebotsparametersatz mit, insbesondere harten und weichen Angebotsparametern umfassen und dass in der Vergleichs-Routine (8) der Grad der Übereinstimmung auf Basis der weichen Auftragsparameter und vorzugsweise der weichen Angebotsparameter ermittelt wird,
vorzugsweise, dass dem Benutzer (B) nur Dienstleistungsangebote (7) vorgeschlagen werden, bei denen alle harten Auftragsparameter mit den Angebotsparametern übereinstimmen, weiter vorzugsweise, dass dem Benutzer (B) nur Dienstleistungsangebote (7) vorgeschlagen werden, bei denen alle harten Angebotsparameter mit den Auftragsparametern übereinstimmen.

3. Verfahren nach Anspruch 2, **dadurch gekennzeichnet, dass** die Auftragsparameter und vorzugsweise die Angebotsparameter, zumindest teilweise, von der Serverplattform (S) als hart oder weich klassifiziert werden, vorzugsweise, dass die Auftragsparameter teilweise von dem Benutzer (B) als hart oder weich klassifiziert werden und/oder die Angebotsparameter teilweise von dem jeweiligen Dienstleister (D) als hart oder weich klassifiziert werden, weiter vorzugsweise, dass die von dem Benutzer (B) und/oder dem Dienstleister (D) vorgenommene Klassifizierung in der Vergleichs-Routine (8) teilweise von der Serverplattform (S) geändert wird.

4. Verfahren nach Anspruch 2 oder 3, **dadurch gekennzeichnet, dass** der Grad der Übereinstimmung basierend auf einer Gewichtung der weichen und vorzugsweise der harten Auftragsparameter und/oder Angebotsparameter ermittelt wird, vorzugsweise, dass von der Serverplattform (S) auf Basis des Grads der Übereinstimmung eine Rangfolge der Dienstleistungsangebote (7) ermittelt und dem Benutzer (B) zumindest teilweise angezeigt wird.

5. Verfahren nach einem der vorhergehenden Ansprüche, **dadurch gekennzeichnet, dass** die Schlaginformationen Informationen zur Lage des landwirtschaftlichen Schlags (2), insbesondere Anfahrtsdaten, und/oder Informationen zur Größe des landwirtschaftlichen Schlags (2), insbesondere Abmessungen des landwirtschaftlichen Schlags (2), und/oder Informationen zur Bodenart des landwirtschaftlichen Schlags (2) und/oder Informationen zur Frucht des landwirtschaftlichen Schlags (2), insbesondere einer Fruchtart des landwirtschaftlichen Schlags (2), umfassen.

6. Verfahren nach einem der vorhergehenden Ansprüche, **dadurch gekennzeichnet, dass** in der Auftragsgenerierungs-Routine (3) dem Benutzer (B) zumindest ein Teil der Schlaginformationen angezeigt wird, dass der Benutzer (B) einen Teil der Schlaginformationen als Dienstleistungsanweisungen auswählt und dass die Dienstleistungsanweisungen mit den Schlaginformationen verknüpft werden, um das Auftragsprofil des Dienstleistungsauftrags zu generieren, vorzugsweise, dass das Auftragsprofil dem Benutzer (B) von der Serverplattform (S) angezeigt wird und das Auftragsprofil vom Benutzer (B) abgelehnt oder abgeändert oder akzeptiert wird.

7. Verfahren nach einem der vorhergehenden Ansprüche, **dadurch gekennzeichnet, dass** in der Auftragsgenerierungs-Routine (3) das Auftragsprofil in einer Teil-Auftragsgenerierungs-Routine interaktiv zwischen der Serverplattform (S) und dem Benutzer (B) generiert wird,
indem dem Benutzer (B) zumindest ein Teil der Schlaginformationen angezeigt wird, indem der Benutzer (B) einen Teil der Schlaginformationen als Dienstleistungsanweisungen (4) auswählt, indem die Dienstleistungsanweisungen (4) mit den Schlaginformationen verknüpft werden, um ein Teil-Auftragsprofil des Dienstleistungsauftrags zu generieren, vorzugsweise, dass das Teil-Auftragsprofil dem Benutzer (B) von der Serverplattform (S) angezeigt wird und das Teil-Auftragsprofil vom Benutzer (B) abgelehnt oder abgeändert oder akzeptiert wird.

8. Verfahren nach Anspruch 7, **dadurch gekennzeichnet, dass** im Anschluss an die Teil-Auftragsgenerierungs-Routine von der Serverplattform (S) aus dem Teil-Auftragsprofil prognostizierte Schlaginformationen ermittelt werden und dass die Teil-Auftragsgenerierungs-Routine erneut durchgeführt wird, wobei dem Benutzer (B) zusätzlich oder alternativ zu einem Teil der Schlaginformationen die prognostizierten Schlaginformationen angezeigt werden.

9. Verfahren nach einem der vorhergehenden Ansprüche, **dadurch gekennzeichnet, dass** in der Angebotsgenerierungs-Routine (5) aus betriebswirtschaftlichen Informationen des Dienstleisters (D) als Dienstleisterdaten (6) des jeweiligen Dienstleisters (D) von der Serverplattform (S) Angebotsprofile generiert werden.

10. Verfahren nach Anspruch 9, **dadurch gekennzeichnet, dass** die technischen Informationen des Dienstleisters (D) das Vorhandensein von für den Dienstleistungsauftrag notwendigen Maschinen als harten Angebotsparameter, und/oder die Tauglichkeit von Maschinen für den Dienstleistungsauftrag, insbesondere als weichen Angebotsparameter, umfassen, und/oder, dass die betriebswirtschaftlichen Informationen des Dienstleisters (D) eine zeitliche Verfügbarkeit der Dienstleistung, insbesondere als harten oder weichen Angebotsparameter, und/oder einen Preis der Dienstleistung, insbesondere als weichen Angebotsparameter, umfassen.

11. Verfahren nach einem der vorhergehenden Ansprüche, **dadurch gekennzeichnet, dass** die Ausführung der Dienstleistung dem Benutzer (B) angezeigt wird und der Benutzer (B) ein Feedback (11) zur Qualität der Ausführung an die Serverplattform (S) übermittelt.

12. Verfahren nach einem der vorhergehenden Ansprüche, **dadurch gekennzeichnet, dass** die Vergleichs-Routine (8) von der Serverplattform (S) selbstlernend auf Basis des Feedbacks (11) optimiert wird, vorzugsweise, dass die Vergleichs-Routine (8) auf Basis des Feedbacks hinsichtlich der Präferenzen des Benutzers (B) optimiert wird.

13. Verfahren nach einem der vorhergehenden Ansprüche, **dadurch gekennzeichnet, dass** die Gewichtung der weichen und vorzugsweise der harten Auftragsparameter und/oder Angebotsparameter, insbesondere auf Basis der Dokumentation (10) und/oder des Feedbacks (11), selbstlernend optimiert wird, und/oder, dass die Klassifizierung der Auftragsparameter und/oder der Angebotsparameter als hart oder weich durch die Serverplattform (S), insbesondere auf Basis der Dokumentation (10) und/oder des Feedbacks (11), selbstlernend optimiert wird.

14. Serverplattform eingerichtet zur Durchführung eines Verfahrens nach einem der vorhergehenden Ansprüche.

## Claims

1. Method for performing an agricultural service using a server platform (S),
wherein the server platform (S) communicates with a user (B) and a plurality of service providers (D),
wherein the server platform (S) has a field file (1) comprising field information relating to at least one agricultural field (2) assigned to the user (B), wherein the server platform (S), in an order generation routine (3), generates a service order for performing a field-specific service with an order profile based on the field information and service instructions (4) received from the user (B),
wherein the server platform (S), in a bid generation routine (5), generates service bids (7), each with a bid profile, from service provider data (6) from service providers (D),
wherein the server platform (S) compares the order profile with the bid profiles in a comparison routine (8), determines in each case a degree of correspondence between the order profile and the bid profiles and suggests to the user (B) one or more service bids (7) suitable for the service order based on the degree of correspondence, and
wherein the server platform (S), in an order award routine (9), based on a selection by the user (B) of one of the service bids (7), commissions the service provider (D) of the selected service bid (7) to perform the service,
wherein the service is sowing, fertilization, soil sampling, crop protection or harvesting,
wherein, in the bid generation routine (5), bid profiles are generated by the server platform (S) from technical information relating to the service provider (D) as service provider data (6) relating to the respective service provider (D),
wherein the technical information relating to the service provider (D) includes the presence of machinery necessary for the service order,
wherein the performance of the sowing, fertilization, soil sampling, crop protection or harvesting is automatically documented by the service provider (D) using an agricultural machine and the documentation is transmitted to the server platform (S),
wherein the documentation is created by sensors of the agricultural machine,
wherein the comparison routine (8) is optimized by the server platform (S) in a self-learning manner on the basis of the documentation created by means of the sensors of the agricultural machine.

2. Method according to Claim 1, **characterized in that** the order profile comprises an order parameter set with hard and soft order parameters, **in that** the bid profiles each comprise a bid parameter set with, in particular, hard and soft bid parameters, and **in that** the degree of correspondence is determined in the comparison routine (8) on the basis of the soft order parameters and preferably the soft bid parameters,
preferably **in that** only service bids (7) in which all hard order parameters correspond to the bid parameters are suggested to the user (B), further preferably **in that** only service bids (7) in which all hard bid parameters correspond to the order parameters are suggested to the user (B).

3. Method according to Claim 2, **characterized in that** the order parameters and preferably the bid parameters are classified, at least partially, as hard or soft by the server platform (S), preferably **in that** the order parameters are partially classified as hard or soft by the user (B) and/or the bid parameters are partially classified as hard or soft by the respective service provider (D), more preferably **in that** the classification carried out by the user (B) and/or the service provider (D) is partially changed by the server platform (S) in the comparison routine (8).

4. Method according to Claim 2 or 3, **characterized in that** the degree of correspondence is determined based on a weighting of the soft and preferably hard order parameters and/or bid parameters, preferably **in that** the server platform (S) determines a ranking of the service bids (7) based on the degree of correspondence and displays it at least partially to the user (B).

5. Method according to one of the preceding claims, **characterized in that** the field information comprises information relating to the location of the agricultural field (2), in particular journey data, and/or information relating to the size of the agricultural field (2), in particular dimensions of the agricultural field (2), and/or information relating to the soil type of the agricultural field (2) and/or information relating to the crop of the agricultural field (2), in particular a crop type of the agricultural field (2).

6. Method according to one of the preceding claims, **characterized in that**, in the order generation routine (3), at least a portion of the field information is displayed to the user (B), **in that** the user (B) selects a portion of the field information as service instructions, and **in that** the service instructions are linked to the field information in order to generate the order profile of the service order, preferably **in that** the order profile is displayed to the user (B) by the server platform (S) and the order profile is rejected or modified or accepted by the user (B).

7. Method according to one of the preceding claims, **characterized in that**, in the order generation routine (3), the order profile is generated interactively between the server platform (S) and the user (B) in a partial order generation routine
by displaying at least a portion of the field information to the user (B), by the user (B) selecting a portion of the field information as service instructions (4), by linking the service instructions (4) to the field information in order to generate a partial order profile of the service order, preferably **in that** the partial order profile is displayed to the user (B) by the server platform (S) and the partial order profile is rejected or modified or accepted by the user (B).

8. Method according to Claim 7, **characterized in that**, after the partial order generation routine, field information predicted by the server platform (S) from the partial order profile is determined, and **in that** the partial order generation routine is performed again, wherein the predicted field information is displayed to the user (B) in addition or as an alternative to a portion of the field information.

9. Method according to one of the preceding claims, **characterized in that**, in the bid generation routine (5), bid profiles are generated by the server platform (S) from business information relating to the service provider (D) as service provider data (6) relating to the respective service provider (D).

10. Method according to Claim 9, **characterized in that** the technical information relating to the service provider (D) comprises the presence of machinery necessary for the service order as a hard bid parameter, and/or the suitability of machinery for the service order, in particular as a soft bid parameter, and/or **in that** the business information relating to the service provider (D) comprises a time availability of the service, in particular as a hard or soft bid parameter, and/or a price of the service, in particular as a soft bid parameter.

11. Method according to one of the preceding claims, **characterized in that** the performance of the service is displayed to the user (B), and the user (B) transmits feedback (11) on the quality of the performance to the server platform (S).

12. Method according to one of the preceding claims, **characterized in that** the comparison routine (8) is optimized by the server platform (S) in a self-learning manner on the basis of the feedback (11), preferably **in that** the comparison routine (8) is optimized with regard to the preferences of the user (B) on the basis of the feedback.

13. Method according to one of the preceding claims, **characterized in that** the weighting of the soft and preferably the hard order parameters and/or bid parameters is optimized in a self-learning manner, in particular on the basis of the documentation (10) and/or the feedback (11), and/or **in that** the classification of the order parameters and/or the bid parameters as hard or soft is optimized by the server platform (S) in a self-learning manner, in particular on the basis of the documentation (10) and/or the feedback (11).

14. Server platform configured to carry out a method according to one of the preceding claims.

## Revendications

1. Procédé d'exécution d'une prestation de service agricole au moyen d'une plateforme serveur (S),
la plateforme serveur (S) communiquant avec un utilisateur (B) et plusieurs prestataires de services (D),
la plateforme serveur (S) comportant un registre de parcelles (1) comprenant des informations de parcelle relatives à au moins une parcelle agricole (2) associée à l'utilisateur (B),
la plateforme serveur (S) générant, dans une routine de génération de commandes (3) basée sur les informations de parcelle et sur des instructions de prestation de service (4) reçues de l'utilisateur (B), une commande de prestation de service pour l'exécution d'une prestation de service agricole spécifique à la parcelle avec un profil de commande,
la plateforme serveur (S) générant, dans une routine de génération d'offres (5), des offres de prestation de service (7) respectivement dotées d'un profil d'offre à partir de données de prestataire (6) provenant de prestataires de services (D),
la plateforme serveur (S) comparant, dans une routine de comparaison (8), le profil de commande aux profils d'offres, déterminant respectivement un degré de correspondance entre le profil de commande et les profils d'offres, et proposant à l'utilisateur (B), sur la base du degré de correspondance, une ou plusieurs offres de prestation de service (7) adaptées à la commande de prestation de service, et
la plateforme serveur (S) chargeant, dans une routine d'attribution de commande (9) basée sur une sélection par l'utilisateur (B) de l'une des offres de prestation de service (7), le prestataire de service (D) de l'offre de prestation de service (7) sélectionnée de l'exécution de la prestation de service,
la prestation de service étant un semis, une fertilisation, un échantillonnage de sol, une protection phytosanitaire ou une récolte,
des profils d'offres étant générés par la plateforme serveur (S) dans la routine de génération d'offres (5) à partir d'informations techniques du prestataire de service (D) en tant que données de prestataire (6) du prestataire de service (D) respectif,
les informations techniques du prestataire de service (D) comprenant la présence de machines nécessaires à la commande de prestation,
l'exécution du semis, de la fertilisation, de l'échantillonnage de sol, de la protection phytosanitaire ou de la récolte étant documentée automatiquement par le prestataire de service (D) au moyen d'une machine agricole, et la documentation étant transmise à la plateforme serveur (S),
la documentation étant établie par des capteurs de la machine agricole,
la routine de comparaison (8) étant optimisée par la plateforme serveur (S) de manière auto-apprenante sur la base de la documentation établie au moyen des capteurs de la machine agricole.

2. Procédé selon la revendication 1, **caractérisé en ce que** le profil de commande comprend un ensemble de paramètres de commande comportant des paramètres de commande stricts et souples, **en ce que** les profils d'offres comprennent respectivement un ensemble de paramètres d'offre comportant en particulier des paramètres d'offre stricts et souples, et **en ce que** le degré de correspondance est déterminé dans la routine de comparaison (8) sur la base des paramètres de commande souples et, de préférence, des paramètres d'offre souples,
de préférence, **en ce que** seules les offres de prestation de service (7) pour lesquelles tous les paramètres de commande stricts correspondent aux paramètres d'offre sont proposées à l'utilisateur (B), et **en ce que** de préférence encore, seules les offres de prestation de service (7) pour lesquelles tous les paramètres d'offre stricts correspondent aux paramètres de commande sont proposées à l'utilisateur (B).

3. Procédé selon la revendication 2, **caractérisé en ce que** les paramètres de commande et de préférence les paramètres d'offre sont classés, au moins en partie, comme stricts ou souples par la plate-forme serveur (S), de préférence, **en ce que** les paramètres de commande sont classés en partie comme stricts ou souples par l'utilisateur (B) et/ou les paramètres d'offre sont classés en partie comme stricts ou souples par le prestataire de service (D) respectif, de préférence encore, **en ce que** la classification effectuée par l'utilisateur (B) et/ou le prestataire de service (D) est modifiée en partie par la plateforme serveur (S) dans la routine de comparaison (8).

4. Procédé selon la revendication 2 ou 3, **caractérisé en ce que** le degré de correspondance est déterminé sur la base d'une pondération des paramètres de commande souples et, de préférence, des paramètres de commande stricts et/ou des paramètres d'offre, de préférence **en ce que**, sur la base du degré de correspondance, un classement des offres de prestation de service (7) est déterminé par la plateforme serveur (S) et est au moins en partie présenté à l'utilisateur (B).

5. Procédé selon l'une des revendications précédentes, **caractérisé en ce que** les informations de parcelle comprennent des informations relatives à la localisation de la parcelle agricole (2), en particulier des données d'accès, et/ou des informations relatives à la taille de la parcelle agricole (2), en particulier des dimensions de la parcelle agricole (2), et/ou des informations relatives au type de sol de la parcelle agricole (2) et/ou des informations relatives à la culture de la parcelle agricole (2), en particulier un type de culture de la parcelle agricole (2).

6. Procédé selon l'une des revendications précédentes, **caractérisé en ce que**, dans la routine de génération de commandes (3), au moins une partie des informations de parcelle est présentée à l'utilisateur (B), **en ce que** l'utilisateur (B) sélectionne une partie des informations de parcelle en tant qu'instructions de prestation de service, et **en ce que** les instructions de prestation de service sont liées aux informations de parcelle afin de générer le profil de commande de la commande de prestation de service, de préférence, **en ce que** le profil de commande est présenté à l'utilisateur (B) par la plateforme serveur (S) et le profil de commande est rejeté, modifié ou accepté par l'utilisateur (B).

7. Procédé selon l'une des revendications précédentes, **caractérisé en ce que**, dans la routine de génération de commandes (3), le profil de commande est généré de manière interactive entre la plateforme serveur (S) et l'utilisateur (B) dans une routine de génération de commande partielle,
par le fait qu'au moins une partie des informations de parcelle est présentée à l'utilisateur (B), que l'utilisateur (B) sélectionne une partie des informations de parcelle en tant qu'instructions de prestation de service (4), et que les instructions de prestation de service (4) sont liées aux informations de parcelle afin de générer un profil de commande partiel de la commande de prestation de service, de préférence, **en ce que** le profil de commande partiel est présenté à l'utilisateur (B) par la plateforme serveur (S) et le profil de commande partiel est rejeté, modifié ou accepté par l'utilisateur (B) .

8. Procédé selon la revendication 7, **caractérisé en ce que**, à la suite de la routine de génération de commande partielle, des informations de parcelle pronostiquées sont déterminées par la plateforme serveur (S) à partir du profil de commande partiel, et **en ce que** la routine de génération de commande partielle est à nouveau exécutée, les informations de parcelle pronostiquées étant présentées à l'utilisateur (B) en plus ou en remplacement d'une partie des informations de parcelle.

9. Procédé selon l'une des revendications précédentes, **caractérisé en ce que**, dans la routine de génération d'offres (5), des profils d'offres sont générés par la plateforme serveur (S) à partir d'informations économiques du prestataire de service (D) en tant que données de prestataire (6) du prestataire de service (D) respectif.

10. Procédé selon la revendication 9, **caractérisé en ce que** les informations techniques du prestataire de service (D) comprennent la présence de machines nécessaires à la commande de prestation de service en tant que paramètre d'offre strict, et/ou l'aptitude de machines pour la commande de prestation de service, en particulier en tant que paramètre d'offre souple, et/ou **en ce que** les informations économiques du prestataire de service (D) comprennent une disponibilité temporelle de la prestation de service, en particulier en tant que paramètre d'offre strict ou souple, et/ou un prix de la prestation de service, en particulier en tant que paramètre d'offre souple.

11. Procédé selon l'une des revendications précédentes, **caractérisé en ce que** l'exécution de la prestation de service est présentée à l'utilisateur (B) et **en ce que** l'utilisateur (B) transmet à la plateforme serveur (S) un retour d'information (11) concernant la qualité de l'exécution.

12. Procédé selon l'une des revendications précédentes, **caractérisé en ce que** la routine de comparaison (8) est optimisée par la plateforme serveur (S) de manière auto-apprenante sur la base du retour d'information (11), de préférence, **en ce que** la routine de comparaison (8) est optimisée sur la base du retour d'information en ce qui concerne les préférences de l'utilisateur (B).

13. Procédé selon l'une des revendications précédentes, **caractérisé en ce que** la pondération des paramètres de commande souples et, de préférence, stricts et/ou des paramètres d'offre est optimisée de manière auto-apprenante, en particulier sur la base de la documentation (10) et/ou du retour d'information (11), et/ou **en ce que** la classification des paramètres de commande et/ou des paramètres d'offre comme stricts ou souples par la plateforme serveur (S) est optimisée de manière auto-apprenante, en particulier sur la base de la documentation (10) et/ou du retour d'information (11).

14. Plate-forme serveur configurée pour la mise en œuvre d'un procédé selon l'une des revendications précédentes.
